# Europäisches Patentamt

# European Patent Office

# Office européen des brevets

(19)

(11) Veröffentlichungsnummer: **0 040 394**
**B1**

(12) ## EUROPÄISCHE PATENTSCHRIFT

(45) Veröffentlichungstag der Patentschrift:
06.07.83

(51) Int. Cl.³: **F 16 C 29/06**

(21) Anmeldenummer: **81103670.6**

(22) Anmeldetag: **13.05.81**

(54) Vorrichtung zur geradlinigen Führung eines Maschinenelementes längs eines Balkens.

(30) Priorität: **20.05.80 DE 3019131**

(43) Veröffentlichungstag der Anmeldung:
**25.11.81 Patentblatt 81/47**

(45) Bekanntmachung des Hinweises auf die Patenterteilung:
**06.07.83 Patentblatt 83/27**

(84) Benannte Vertragsstaaten:
**CH FR GB IT LI**

(56) Entgegenhaltungen:
**DE-A-2 136 024**
**DE-U-7 508 272**
**US-A-2 576 269**
**US-A-2 628 135**
**US-A-3 353 875**

(73) Patentinhaber: **SKF KUGELLAGERFABRIKEN GMBH,
Ernst-Sachs-Strasse 2-8 Postfach 1440,
D-8720 Schweinfurt (DE)**

(72) Erfinder: **Ernst, Horst M., Frankenstrasse 33,
D-8731 Eltingshausen (DE)**
Erfinder: **Olschewski, Armin, Stösselstrasse 8,
D-8720 Schweinfurt (DE)**
Erfinder: **Brandenstein, Manfred, Tränkgasse 57,
D-8781 Eussenheim (DE)**
Erfinder: **Walter, Lothar, Harald-Hamberg-Strasse 18,
D-8720 Schweinfurt (DE)**

(74) Vertreter: **Glanz, Werner, Dipl.-Ing.,
Ernst-Sachs-Strasse 2-8, D-8720 Schweinfurt (DE)**

# Vorrichtung zur geradlinigen Führung eines Maschinenelementes längs eines Balkens

Die vorliegende Erfindung betrifft eine Vorrichtung zur geradlinigen Führung eines Maschinenelementes längs eines Balkens, mit den im Oberbegriff des Hauptanspruches aufgeführten Merkmalen.

Es ist eine Vorrichtung zur geradlinigen Führung eines Maschinenelementes längs eines Balkens bekannt, bei der der Balken einen doppel-T-förmigen Querschnitt hat, der durch die Form des zugehörigen Maschinenelementes festgelegt ist (DE-GM 7 508 272). Diese bekannte Vorrichtung hat den Nachteil, daß für jeden für die vorliegende Biege- und/oder Drehmomentbeanspruchung gestalteten Balken ein besonderes Maschinenelement mit zugehörigen Halteplatten vorgesehen werden muß. Außerdem kann der Balken in das Maschinenelement nur in einer ganz bestimmten Drehstellung oder Höhenlage eingebaut werden. Die bekannte Vorrichtung kann deshalb nicht für verschiedene Einbaufälle in wirtschaftlich großen Stückzahlen gefertigt werden und ist wegen Einzelanfertigung relativ teuer.

Des weiteren ist eine Vorrichtung zur geradlinigen Führung eines Maschinenelementes der angegebenen Gattung bekannt, bei der in lediglich einer der beiden längsgerichteten, durchgehenden Öffnungen jeder geschlossenen Reihe von Wälzkörpern lastübertragende Wälzkörper eingebaut sind (US-A-3 353 875). Die andere Öffnung jeder Reihe ist über einer längsverlaufenden Vertiefung im Maschinenelement angeordnet, so daß die in dieser aufgenommenen Wälzkörper keine Belastung übertragen können. Bei dieser weiteren bekannten Vorrichtung können nur Balken mit einer festliegenden Anordnung der Laufbahnen für die Wälzkörper eingebaut werden. Diese bekannte Vorrichtung muß also ebenfalls für jeden einzelnen Einbaufall besonders hergestellt werden, so daß ihre Fertigung aufwendig ist.

Der in Anspruch 1 gekennzeichneten Erfindung liegt die Aufgabe zugrunde, eine vielseitig verwendbare Vorrichtung zur geradlinigen Führung eines Maschinenelementes längs eines Balkens der genannten Gattung zu schaffen, bei der verschieden gestaltete Balken und/oder Balken in verschiedener Stellung in ein und demselben Maschinenelement eingebaut werden können.

Diese Aufgabe wird durch die in Anspruch 1 gekennzeichneten Merkmale gelöst.

Mit der Anordnung nach der Erfindung wird erreicht, daß im Querschnitt beliebige, also auch runde, doppel-T-förmige und kastenförmige Balken, in ein und demselben Schlittenelement in verschiedener Stellung eingebaut werden können. Da das Maschinenelement mit eingebauten Halteplatten und Wälzkörpern somit für viele unterschiedliche Balken und verschiedene Anordnungen der Balken Verwendung findet, kann dieses in einer Serienfertigung wirtschaftlich hergestellt werden.

Vorteilhafte Weiterbildungen der Erfindung sind in den Unteransprüchen gekennzeichnet.

Mit der Ausgestaltung nach Anspruch 2 ist ein konstruktiv einfacher Aufbau des Maschinenelementes möglich, wobei die Wälzkörper beider Längsführungsbahnen jeder Reihe von Wälzkörpern ein und denselben Abstand von der Längsmittenebene des Balkens aufweisen. Somit können in ihrer Querschnittsbreite gleiche, aber in ihrer Querschnittshöhe unterschiedliche Balken in verschiedener Höhenlage in ein und dasselbe Maschinenelement eingebaut werden. Aber auch unterschiedlich geformte Balken lassen sich somit in ein und dasselbe Maschinenelement in verschiedener Höhenlage einbauen.

Die Ausgestaltung nach Anspruch 3 bewirkt, daß ein und derselbe Balken in verschiedener Höhenlage oder Drehstellung im Maschinenelement eingebaut werden kann. Damit kann die Vorrichtung ohne weiteres im Betrieb geändert bzw. zur Aufnahme unterschiedlich gestalteter Anschlußelemente umgebaut werden.

Mit der Ausgestaltung nach Anspruch 4 wird erreicht, daß die eine längsgerichtete Laufbahn des Balkens mit den lastaufnehmenden Wälzkörpern der betreffenden Reihe von Wälzkörpern in Wälzberührung steht, während eine oder mehrere andere längsgerichten Laufbahnen des Balkens keinen Kontakt mit den Wälzkörpern haben. Durch Herausziehen des Balkens aus dem Maschinenelement, Verstellen des Balkens und Neueinfädeln des Balkens in das Maschinenelement kommt eine andere unverbrauchte längsgerichtete Laufbahn des Balkens mit den lastaufnehmenden Wälzkörpern in Wälzberührung. Dadurch kann die Lebensdauer der Vorrichtung bei Abnutzungserscheinungen auf den Laufbahnen des Balkens wesentlich verlängert werden. Außerdem kann durch entsprechendes Einfädeln des Balkens in das Maschinenelement die Stellung des Balkens relativ zum Maschinenelement geändert und den Betriebsbedingungen einer oder mehrerer Maschinen angepaßt werden. Der Verwendungsbereich der Vorrichtung zur geradlinigen Führung eines Maschinenelementes längs eines Balkens ist dadurch vergrößert.

Die Ausgestaltung nach Anspruch 5 hat schließlich zur Folge, daß die Vorrichtung sowohl relativ große Drehmomente als auch hohe Radialbelastungen zwischen Balken und Maschinenelement ohne Überlastung der Wälzkörper aufnehmen kann.

Die erfindungsgemäße Vorrichtung zur geradlinigen Führung eines Maschinenelementes längs eines Balkens wird in der Beschreibung mehrer Ausführungsbeispiele, die in den Zeichnungen dargestellt sind, näher erläutert.

Es zeigt

Fig. 1a einen Querschnitt durch eine Vorrichtung zur geradlinigen Führung eines Maschinenelementes längs eines Balkens mit einem im Querschnitt hohen doppel-T-förmigen Balken,

Fig. 1b einen Querschnitt durch die in Fig. 1a gezeigte Vorrichtung, bei welcher jedoch anstelle des im Querschnitt hohen doppel-T-förmigen Balkens ein solcher mit niedrigem Querschnitt eingebaut ist,

Fig. 1c eine Draufsicht gemäß dem Pfeil A in Fig. 1a und 1b auf eine mit einer Reihe von Wälzkörpern gefüllte Halteplatte,

Fig. 2a einen Querschnitt durch eine abgeänderte Vorrichtung mit geradliniger Führung eines Maschinenelementes längs eines im Querschnitt hohen kastenförmigen Balkens,

Fig. 2b einen Querschnitt durch die in Fig. 2a gezeigte Vorrichtung bei welcher jedoch anstelle des im Querschnitt hohen kastenförmigen Balkens ein solcher mit niedrigem Querschnitt eingebaut ist,

Fig. 3a einen Querschnitt durch eine weitere abgeänderte Vorrichtung mit geradliniger Führung eines Maschinenelementes längs eines im Querschnitt doppel-T-förmigen Balkens,

Fig. 3b einen Querschnitt durch die in Fig. 3a dargestellte Vorrichtung, bei welcher jedoch der doppel-T-förmige Balken aus dem Maschinenelement herausgezogen, um 90 Grad gedreht und dann in das Maschinenelement wieder eingesetzt worden ist,

Fig. 4 einen Querschnitt durch eine weitere abgeänderte Vorrichtung mit zylindrischen Wälzkörpern, deren Drehachsen abwechselnd um 90 Grad gedreht in jeder Reihe von Wälzkörpern angeordnet sind und

Fig. 5 einen Querschnitt durch eine weitere abgeänderte Vorrichtung mit geradliniger Führung eines Maschinenelementes längs eines im Querschnitt runden Balkens.

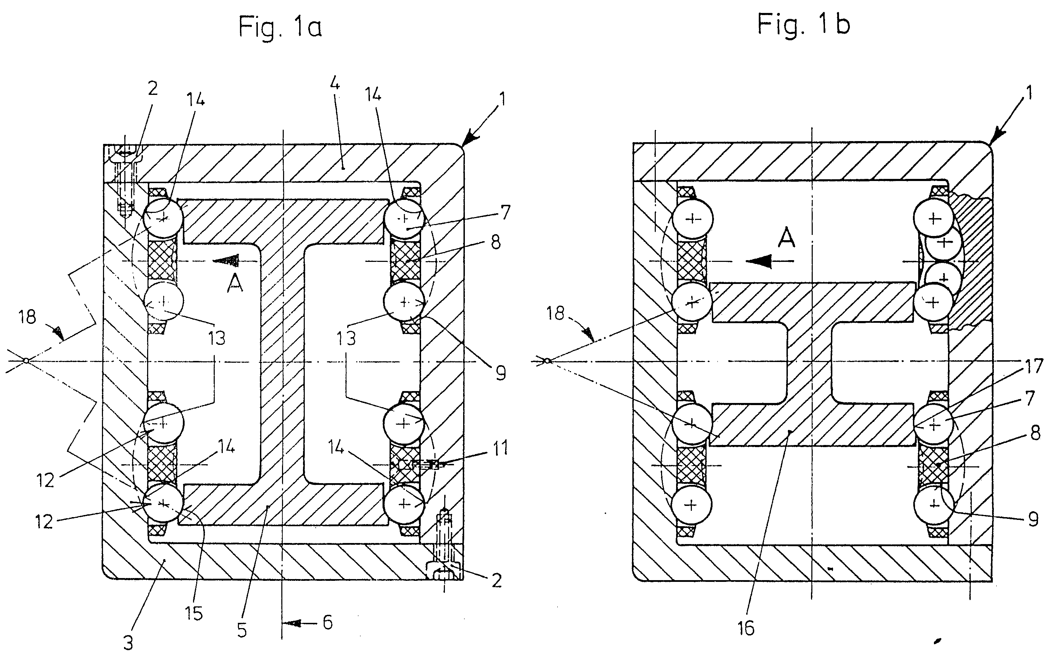

Mit 1 ist in Fig. 1a ein im Querschnitt kastenförmiges Maschinenelement bezeichnet, welches sich aus den beiden durch Schrauben 2 fest miteinander verbundenen Bauteilen 3 und 4 zusammensetzt. Durch das Maschinenelement 1 ist ein im Querschnitt hoher doppel-T-förmiger Balken 5 hindurchgeführt.

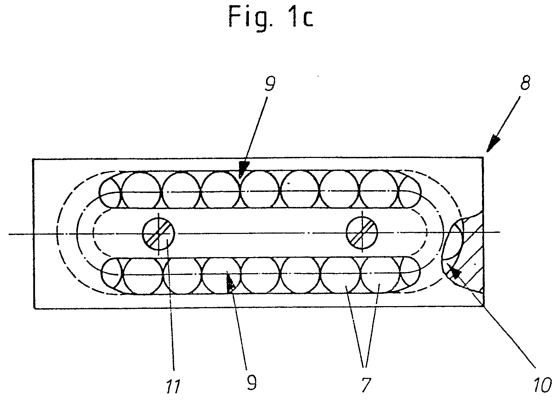

Beiderseits der Längsmittenebene 6 des Balkens 5 sind jeweils zwei Reihen von endlos umlaufenden Wälzkörpern 7 angeordnet. Jede Reihe von Wälzkörpern 7 ist in einer Halteplatte 8 aus elastischem Kunststoff eingebaut, in welcher zwei Längsführungsbahnen 9 und diese paarweise miteinander verbindende Umlenkführungsbahnen 10 (siehe Fig. 1c) zur Aufnahme und Führung von endlos umlaufenden Wälzkörpern 7 eingearbeitet sind. Die Halteplatten 8 sind durch Schrauben 11 auf der Innenwandung des kastenförmigen Maschinenelementes 1 befestigt, und zwar in seitensymmetrischer Anordnung zur Längsmittenebene 6.

Die beiden Längsführungsbahnen 9 jeder Reihe von Wälzkörpern 7 sind durch jeweils eine längsgerichtete, durchgehende Öffnung 12 in jeder Halteplatte 8 gebildet. Dabei laufen die Wälzkörper 7 der beiden Längsführungsbahnen 9 jeder Reihe auf jeweils einer längsgerichteten Laufbahn 13, 14 des Maschinenelementes 1. Die Wälzkörper 7 beider Längsführungsbahnen 9 ragen in Richtung der Längsmittenebene 6 über die Halteplatte 8 vor.

Im vorliegenden, in Fig. 1a dargestellten Fall stehen die Wälzkörper 7 der äußeren der beiden Längsführungsbahnen 9 jeder Reihe zur Lastübertragung mit der längsgerichteten Laufbahn 15 des im Querschnitt hohen doppel-T-förmigen Balkens 5 in Wälzberührung. Die Kraftwirkungslinien 18 der zwischen den Laufbahnen 14 und 15 rollenden Wälzkörper 7 der zwei beiderseits der Längsmittenebene 6 angeordneten Reihen gehen seitlich nach außen zusammen. Dadurch wird zwischen den belasteten Wälzkörpern 7 der zwei auf jeder Seite der Längsmittenebene 6 angeordneten Reihen von Wälzkörpern 7 eine relativ große wirksame Stützlänge gebildet und es können von der Vorrichtung auch große um die Längsachse des Balkens 5 drehende Kraftmomente ohne schädliche Überlastung der Wälzkörper 7 aufgenommen werden.

Im übrigen sind die beiden längsgerichteten Laufbahnen 13, 14 des Maschinenelementes 1 jeder Reihe von Wälzkörpern 7 in einer parallel zur Längsmittenebene 6 des Balkens 5 liegenden Ebene angeordnet, so daß sich ein einfacher Aufbau des Maschinenelementes 1 ergibt. Sowohl die längsgerichteten Laufbahnen 13, 14 des Maschinenelementes 1 als auch die längsgerichteten Laufbahnen 15 des Balkens 5 sind durch eine Rille gebildet, deren Querschnitt der Umfangskontur der kugeligen Wälzkörper 7 angepaßt ist.

In Fig. 1b ist das in Fig. 1a dargestellte Maschinenelement 1 mit Halteplatten 8 und Wälzkörpern 7 gezeigt, in dem jedoch ein im Querschnitt niedriger doppel-T-förmiger Balken 16 eingebaut ist. Hier stehen die Wälzkörper 7 der inneren der beiden Längsführungsbahnen 9 jeder Reihe von Wälzkörpern 7 zur Lastübertragung mit einer längsgerichteten Laufbahn 17 des Balkens 16 in Wälzberührung. Die Kraftwirkungslinien 18 der belasteten Wälzkörper 7 gehen wiederum seitlich nach außen zusammen, so daß die Vorrichtung auch hohe Kraftmomente ohne Überlastung der Wälzkörper 7 aufnehmen kann.

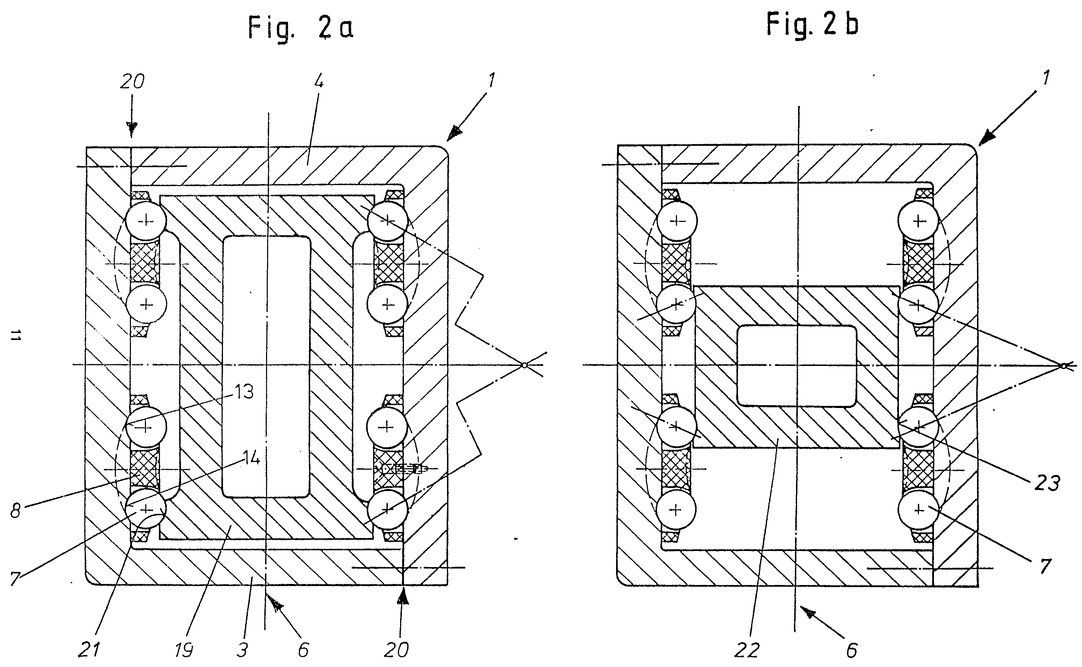

In Fig. 2a ist eine Vorrichtung zur geradlinigen Führung eines Maschinenelementes 1 längs eines im Querschnitt hohen kastenförmigen Balkens 19 gezeigt. Das Maschinenelement 1 mit den Halteplatten 8 und dem Wälzkörper 7 ist ähnlich wie das in Fig. 1a und 1b dargestellte Maschinenelement aus zwei Bauteilen 3 und 4 zusammengesetzt, wobei die Trennfugen 20 der beiden miteinander verschraubten Bauteile 3, 4 hier jedoch parallel zur Mittenebene 6 des Balkens 19 verlaufen. Durch Verstellen des gegenseitigen Abstandes der beiden Bauteile 3, 4 mit kalibrierten Blechen (nicht gezeigt) in der Trennfuge 20 kann das Spiel bzw. die Vorspannung der belasteten Wälzkörper 7 zwischen den äußeren längsgerichteten Laufbahnen 14 des Maschinenelementes 1 und den zugehörigen längsgerichteten Laufbahnen 21 des Balkens 19 eingestellt werden.

Fig. 2b zeigt das in Fig. 2a dargestellte Maschinenelement 1, bei dem anstelle des im Querschnitt hohen kastenförmigen Balkens ein Balken 22 mit niedrigem kastenförmigen Querschnitt eingebaut ist. Hier stehen die Wälzkörper 7 der inneren der beiden Längsführungsbahnen 9 jeder Reihe von Wälzkörpern 7 zur Lastübertragung mit einer längsgerichteten Laufbahn 23 des Balkens 22 in Wälzberührung.

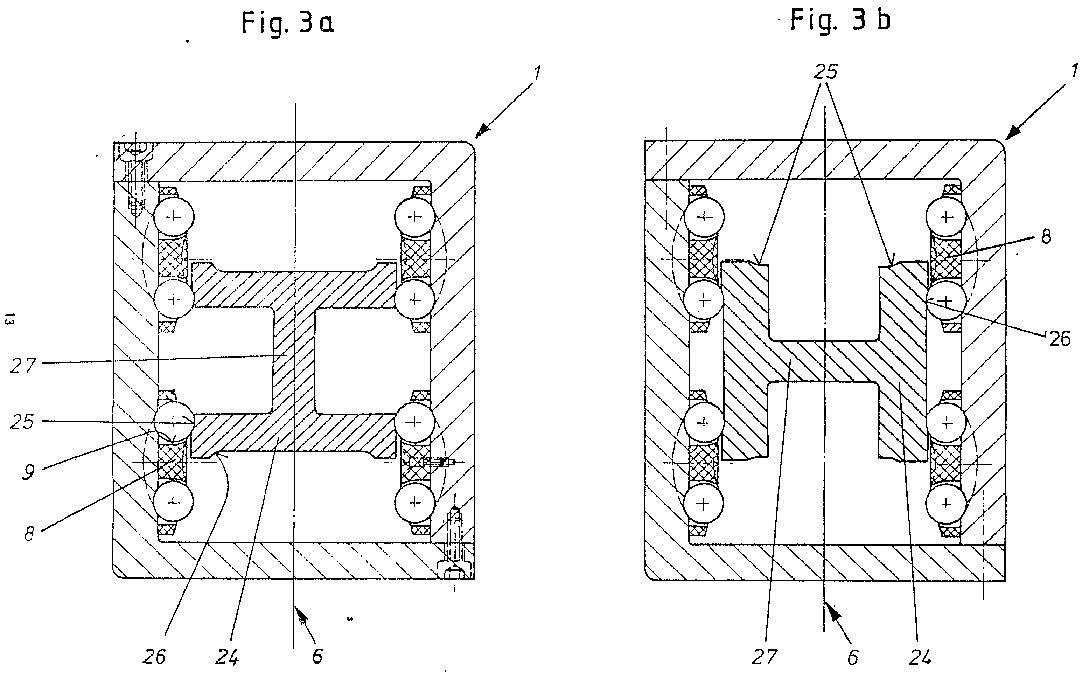

Eine weitere abgeänderte Vorrichtung zur geradlinigen Führung eines Maschinenelementes 1 längs eines Balkens 24 ist in Fig. 3a und 3b gezeigt. Das Maschinenelement 1 mit zugehörigen Halteplatten 8 und Wälzkörpern 7 ist wie das in Fig. 1a und 1b dargestellte Maschinenelement 1 gebaut. Im Maschinenelement 1 sitzt jedoch ein Balken 24, welcher mehrere längsgerichtete Laufbahnen 25, 26 für die Wälzkörper 7 der inneren Längsführungsbahnen 9 jeder Reihe von Wälzkörpern 7 im Maschinenelement 1 aufweist. In Fig. 3a ist der in seinem Querschnitt doppel-T-förmige Balken 24 in einer Stellung im Maschinenelement eingebaut, bei der der Stegabschnitt 27 in der Mittenebene 6 liegt und die längsgerichteten Laufbahnen 25 des Balkens 24 mit den lastaufnehmenden Wälzkörpern 7 der inneren Längsführungsbahnen 9 in Wälzberührung kommen. Dieser Balken 24 besitzt also für radiale Kräfte, die in der Längsmittenebene 6 vom Maschinenelement 1 über die belasteten Kugeln 7 auf den Balken 24 übertragen werden, eine besonders hohe Biegesteifigkeit.

Bei der in Fig. 3b gezeigten Anordnung ist dieselbe in Fig. 3a dargestellte Vorrichtung mit dem Maschinenelement 1 zu sehen, bei der jedoch der Balken 24 um 90 Grad gedreht im Maschinenelement 1 eingebaut ist. Hier stehen die anderen längsgerichteten Laufbahnen 26 des Balkens 24 mit den lastaufnehmenden Wälzkörpern 7 derselben inneren Längsführungsbahnen 9 der Halteplatten 8 in Wälzberührung. Der Stegabschnitt 27 verläuft hier quer zur Längsmittenebene 6, so daß der im Querschnitt doppel-T-förmige Balken 24 für quer zur Mittenebene 6 verlaufende Kräfte eine besonders hohe Biegesteifigkeit aufweist.

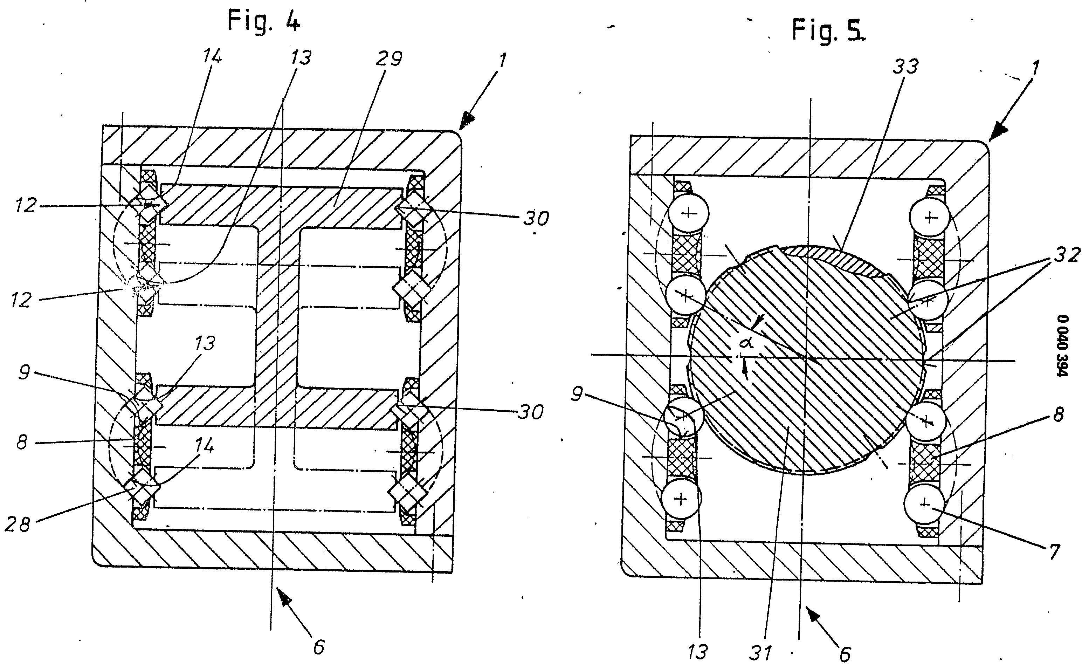

In Fig. 4 ist eine abgeänderte Vorrichtung mit zylindrischen Wälzkörpern 28 eingezeichnet, deren Drehachsen abwechselnd um 90 Grad gedreht in jeder Reihe von Wälzkörpern 28 angeordnet sind (Kreuzrollenlager). Jede Reihe von endlos umlaufenden Wälzkörpern 28 ist in jeweils einer am Maschinenelement 1 durch Schrauben (nicht gezeigt) befestigten Halteplatte 8 eingebaut. Auf jeder Seite der Längsmittenebene 6 sind zwei Halteplatten 8 seitlich symmetrisch zu dieser Längsmittenebene übereinander angeordnet. Die Längsführungsbahnen 9 jeder Reihe von Wälzkörpern 28 sind jeweils durch eine längsgerichtete, durchgehende Öffnung 12 in den Halteplatten 8 gebildet. Die Wälzkörper 28 der beiden Längsführungsbahnen 9 einer Reihe von Wälzkörpern 28 laufen auf jeweils einer längsgerichteten Laufbahn 13, 14 des Maschinenelementes 1. Sie ragen außerdem aus der Öffnung 12 über die Halteplatte 8 in Richtung der Längsmittenebene 6 vor.

Beim in Fig. 4 dargestellten Ausführungsbeispiel ist der Balken 29 in seinem Querschnitt doppel-T-förmig ausgebildet. Er weist auf beiden Seiten der Längsmittenebene 6 zwei längsgerichtete Laufbahnen 30 auf, die wahlweise mit den Wälzkörpern 28 der einen oder der anderen der beiden Längsführungsbahnen 9 jeder Reihe von Wälzkörpern 28 im Maschinenelement 1 in Wälzberührung gebracht werden können.

Im dargestellten Fall — Fig. 4 — stehen die zwei oberen Laufbahnen 30 des Balkens 29 mit den Wälzkörpern 28 der äußeren Längsführungsbahn 9 der oberen Halteplatten 8 in Wälzberührung, während die zwei unteren Laufbahnen 30 mit den Wälzkörpern 28 der inneren Längsführungsbahn 9 der unteren Halteplatten 8 Wälzberührung haben.

In manchen Fällen ist eine Verstellung des Balkens 29 in seiner Höhe im Maschinenelement 1 erwünscht. Dies kann bei der in Fig. 4 dargestellten Vorrichtung einfach dadurch verwirklicht werden, daß der Balken 29 aus dem Schlittenelement 1 herausgezogen und in einer tieferen Lage wieder eingeschoben wird. Dadurch kommen jetzt die zwei oberen Laufbahnen 30 des Balkens 29 mit den Wälzkörpern 28 der inneren Längsführungsbahn 9 der beiden oberen Halteplatten 8 und die zwei unteren Laufbahnen 30 mit den Wälzkörpern 28 der äußeren Längsführungsbahn 9 der beiden unteren Halteplatten in Wälzberührung (siehe strichpunktiert eingezeichnete Stellung des Balkens 29 in Fig. 4).

In Fig. 5 ist der Querschnitt durch eine weitere abgeänderte Vorrichtung zur geradlinigen Führung eines Maschinenelementes 1 längs eines Balkens 31, welcher hier einen runden Querschnitt aufweist, dargestellt. Das Maschinenelement 1 ist genauso wie das in Fig. 1a und 1b gezeigte Maschinenelement gebaut. Es besitzt ebenfalls auf jeder Seite der Längsmittenebene 6 am Maschinenelement befestigte Halteplatten 8 mit jeweils einer Reihe von kugeligen Wälzkörpern 7.

Auf der Mantelfläche des Balkens 31 sind acht längsgerichtete Laufbahnen 32 eingearbeitet, welche durch jeweils eine dem Querschnitt der Umfangskontur der kugeligen Wälzkörper 7 eng angepaßte Rille gebildet sind. Dabei liegen jeweils vier Laufbahnen 32 den anderen vier Laufbahnen 32 des Balkens 31 diametral gegenüber. Jeweils vier Laufbahnen 32 sind auf einer Seite der Längsmittenebene 6 angeordnet. Im übrigen haben die vier Laufbahnen 32 auf jeder Seite einen gleichmäßigen Abstand voneinander, der durch den Winkel $\alpha$ festgelegt ist.

Zwei Laufbahnen 32, auf jeder Seite der Längsmittenebene 6, stehen jeweils mit den Wälzkörpern 7 der inneren Längsführungsbahn 9 einer Halteplatte 8 in Wälzberührung. Die Vorrichtung kann hohe um die Längsachse des Balkens 31 drehende Drehmomente aufnehmen, weil sowohl die längsgerichteten Laufbahnen 13 des Maschinenelementes 1 als auch die zugehörigen längsgerichteten Laufbahnen 32 des Balkens 31 durch jeweils eine tiefe Rille gebildet sind, deren Querschnitt der Umfangskontur der kugeligen Wälzkörper 7 eng angepaßt ist.

Beim vorliegenden in Fig. 5 dargestellten Ausführungsbeispiel kann die Drehstellung des Balkens 31 um den Winkel $\alpha$ geändert werden. Zu diesem Zweck wird der Balken 31 aus dem Maschinenelement 1 herausgezogen und um den Winkel $\alpha$ so gedreht, daß nunmehr die anderen zwei Laufbahnen 32 der vier Laufbahnen 32 auf jeder Seite der Längsmittenebene 6 mit den Wälzkörpern 7 der inneren Längsführungsbahn 9 jeder Halteplatte beim Wiedereinschieben des Balkens 31 in das Maschinenelement 1 in Wälzberührung kommen. Diese Veränderung der Drehstellung des Balkens 31 im Maschinenelement 1 ist bei vielen Schaltgetrieben erwünscht. Das Drehen des Balkens 31 um den Winkel $\alpha$ erfolgt übrigens auf dem zylindrischen Ansatz 33 am Ende des Balkens 31, so daß der Balken 31 zwischen den Wälzkörpern 7 der inneren Längsführungsbahn 9 jeder Halteplatte 8 genau zentrisch im Maschinenelement 1 geführt wird und dementsprechend einfach und schnell gedreht und durch Zurückschieben wieder in seine Arbeitsstellung gebracht werden kann.

Die oben beschriebenen Ausführungsbeispiele können konstruktiv abgewandelt werden. So brauchen beiderseits der Längsmittenebene des Balkens nicht zwei Reihen von endlos umlaufenden Wälzkörpern in jeweils einer am Maschinenelement befestigten Halteplatte angeordnet zu sein. Vielmehr kann nur eine endlos umlaufende Reihe von Wälzkörpern beiderseits der Längsmittenebene des Balkens angeordnet sein, es können aber auch mehr als zwei Reihen beiderseits der Längsmittenebene vorhanden sein.

Bei entsprechender Ausbildung der längsgerichteten Laufbahnen des Maschinenelementes und des Balkens können die Wälzkörper auch als Rollen mit ballig gewölbter oder zylindrischer Wälzfläche mit gleichgerichteter Ausrichtung der Drehachsen, also mit nicht abwechselnd gekreuzten Drehachsen hintereinander angeordnet sein. Schließlich ist es auch möglich, daß in ein und demselben Maschinenelement Reihen mit verschieden ausgebildeten Wälzkörpern vorhanden sind, also zum Beispiel zwei Reihen mit kugeligen Wälzkörpern und zwei Reihen mit zylindrischen Wälzkörpern.

Die Halteplatten 8 werden vorteilhafterweise aus einem elastischen Werkstoff, z. B. Kunststoff, gefertigt und die Wälzkörper durch Einschnappen in die Längsführungsbahnen oder Umlenkführungsbahnen in die Halteplatte eingeführt, so daß die elastischen Ränder der Führungsbahnen die Wälzkörper zum Teil umgreifen. Auf diese Weise bildet die Halteplatte mit den zugehörigen Wälzkörpern eine vormontierte selbsthaltende Baueinheit, die leicht durch Schrauben oder Kleben am Maschinenelement befestigt werden kann.

## Patentansprüche

1. Vorrichtung zur geradlinigen Führung eines Maschinenelementes (1) längs eines Balkens (5, 16, 19, 22, 24, 27, 29, 31), mit mindestens einer beiderseits der Längsmittenebene (6) des Balkens angeordneten Reihe von endlos umlaufenden Wälzkörpern (7, 28) und mindestens einer auf jeder Seite der Längsmittenebene am Maschinenelement befestigten Halteplatte (8), in welcher zwei Längsführungsbahnen (9) und diese paarweise miteinander verbindende Umlenkführungsbahnen (10) je Reihe von Wälzkörpern eingearbeitet sind, wobei die Halteplatte mit jeweils zwei längsgerichteten, durchgehenden, eine Längsführungsbahn bildenden Öffnungen (12) je geschlossene Reihe von Wälzkörpern versehen ist und die Wälzkörper der beiden Reihen auf jeweils einer längsgerichteten Laufbahn (15, 17, 21, 23, 25, 26, 30, 32) des Maschinenelementes laufen, dadurch gekennzeichnet, daß die Wälzkörper (7, 28) beider Längsführungsbahnen (9) jeder geschlossenen Reihe von Wälzkörpern (7, 28) aus der Öffnung (12) vorragend angeordnet sind, so daß wahlweise die Wälzkörper einer der beiden Längsführungsbahnen (9) zur Lastübertragung mit einer längsgerichteten Laufbahn (15, 17, 21, 23, 25, 26, 30, 32) des Balkens (5, 16, 19, 22, 24, 27, 29, 31) in Wälzberührung bringbar sind.

2. Vorrichtung nach Anspruch 1, dadurch gekennzeichnet, daß die beiden längsgerichteten Laufbahnen (13, 14) des Maschinenelementes (1) jeder Reihe von Wälzkörpern (7, 28) in einer parallel zur Längsmittenebene (6) des Balkens (5, 16, 19, 22, 24, 27, 29, 31) liegenden Ebene angeordnet sind.

3. Vorrichtung nach Anspruch 1 oder 2, dadurch gekennzeichnet, daß ein und derselbe Balken (29) längsgerichtete Laufbahnen (30) für die Wälzkörper (7) der einen und der anderen der beiden Längsführungsbahnen (9) einer oder mehrerer Reihen von Wälzkörpern (28) im Maschinenelement (1) aufweist.

4. Vorrichtung nach Anspruch 1 oder 2, dadurch gekennzeichnet, daß der Balken (24, 31) mehrere längsgerichtete Laufbahnen (25, 26, 32) für die Wälzkörper (7) ein und derselben Längsführungsbahn (9) einer oder mehrerer Reihen von Wälzkörpern im Maschinenelement (1) aufweist.

5. Vorrichtung nach einem der vorhergehenden Ansprüche, dadurch gekennzeichnet, daß die längsgerichteten Laufbahnen (13, 14) des Maschinenelementes (1) und die längsgerichteten Laufbahnen (15, 17, 21, 23, 25, 26, 30, 32) des Balkens (5, 16, 19, 22, 24, 27, 29, 31) durch jeweils eine dem Querschnitt der Umfangskontur der Wälzkörper (7, 28) eng angepaßte Rille gebildet sind.

## Claims

1. A recirculating rolling element mechanism (1) for linear movement of a machine element (1) along a beam (5, 16, 19, 22, 24, 27, 29, 31) comprising at least one endless row of rolling elements (7, 28) which is arranged on either side of a longitudinally extending median plane (6) through the beam (5, 16, 19, 22, 24, 27, 29, 31) and at least one retaining element (8) for the rolling elements (7, 28) which is attached to the machine element (1) on either side of the median plane (6), each retaining element (8) having two longitudinal ducts (12) with reversing ducts (10) adjoining the ends of the longitudinal ducts (12) for each row of rolling elements (7, 28), the rolling elements of each longitudinal duct (12) running on a longitudinal raceway (13, 14) of the machine element (1) and protruding partially in direction to the median plane, characterized in that each retaining element (8) is provided with two through-going longitudinal ducts (12) for each row of rolling elements (7, 28), whereby the rolling elements (7, 28) of either longitudinal duct (12) protrude partly, so that the rolling elements (7, 28) of one or the other of the longitudinal ducts (9) can be selectively brought into load transmitting rolling contact with a longitudinal raceway (15, 17, 21, 23, 25, 26, 30, 32) on the beam (5, 16, 19, 22, 24, 27, 29, 31).

2. A mechanism according to claim 1, characterized in that both longitudinal raceways (13, 14) of the machine element (1) of each row of rolling elements (7, 28) are arranged in a plane which lies parallel to the median plane (6) of the beam (5, 16, 19, 22, 24, 27, 29, 31).

3. A mechanism according to claim 1 or 2, characterized in that one and the same beam (29) is provided with longitudinal raceways (30) for the rolling elements (7) of one or the other of the two longitudinal ducts (9) of one or more rows of rolling elements (28) in the machine element (1).

4. A mechanism according to claim 1 or 2, characterized in that the beam (24, 31) bears a plurality of longitudinal raceways (25, 26, 32) for the rolling elements (7) of one and the same longitudinal duct (9) of one or more rows of rolling elements in the machine element (1).

5. A mechanism according to one of the preceding claims, characterized in that the longitudinal raceways (13, 14) of the machine element (1) and the longitudinal raceways (15, 17, 21, 23, 25, 26, 30, 32) of the beam (5, 16, 19, 22, 24, 27, 29, 31) are formed by a groove, the profile contour of which is narrowly adapted to the contour of the rolling elements (7, 28).

## Revendications

1. Dispositif pour le guidage rectiligne d'un organe de machine (1) le long d'un rail (5, 16, 19, 22, 24, 27, 29, 31), comprenant au moins une rangée d'éléments roulants (7, 28) sans fin disposée de chaque côté du plan médian longitudinal (6) du rail, et au moins une plaque de retenue (8) attachée à l'organe de machine de chaque côté du plan médian longitudinal dans laquelle sont agencés, par rangée d'éléments roulants, deux chemins de guidage longitudinaux (9) et deux chemins de guidage de renvoi (10) les reliant entre eux, chaque plaque de retenue étant pourvue de deux ouvertures (12) par rangée fermée d'éléments roulants, les ouvertures formant un chemin de guidage longitudinal continu, les éléments roulants des deux rangées roulant dans un chemin de roulement (15, 17, 21, 23, 25, 26, 30, 32) chacun de l'organe de machine et saillissant vers le plan médian (6), caractérisé par le fait que chaque plaque de retenue est pourvue de deux ouvertures longitudinales traversantes pour chaque rangée fermée d'éléments roulants (7, 28), ces derniers saillissant ces couvertures (12) de sorte que les éléments roulants d'un des deux chemins de guidage longitudinaux (9) peuvent être facultativement mis en contact roulant avec un chemin de roulement longitudinal (15, 17, 21, 23, 25, 26, 30, 32) du rail (5, 16, 19, 22, 24, 27, 29, 31) afin de transmettre la charge.

2. Dispositif suivant la revendication 1, caractérisé par le fait que les deux chemins de roulement longitudinaux (13, 14) de l'organe de machine (1) de chaque rangée d'éléments roulants (7, 28) sont disposés dans un plan parallèle au plan médian longitudinal (6) du rail (5, 16, 19, 22, 24, 27, 29, 31).

3. Dispositif suivant la revendication 1 ou 2, caractérisé par le fait qu'un même rail (29) est pourvu de chemins de roulement longitudinaux (30) pour les éléments roulants (7) de l'un ou l'autre des deux chemins de guidage longitudinaux (9) d'une ou de plusieurs rangées d'éléments roulants (28) dans l'organe de machine (1).

4. Dispositif suivant la revendication 1 ou 2, caractérisé par le fait que le rail (24, 31) est pourvu de plusieurs chemins de roulement longitudinaux (25, 26, 32) pour les éléments roulants (7) d'un même chemin de guidage longitudinal (9) d'une ou de plusieurs rangées d'éléments roulants dans l'organe de machine (1).

5. Dispositif suivant l'une quelconque des revendications précédentes, caractérisé par le fait que les chemins de roulement longitudinaux (13, 14) de l'organe de machine (1) et les chemins de roulement longitudinaux (15, 17, 21, 23, 25, 26, 30, 32) du rail (5, 16, 19, 22, 24, 27, 29, 31) sont chacun formés par une rainure dont le profil correspond étroitement au diamètre extérieur des éléments roulants (7, 28).

Fig. 1b

Fig. 1a

Fig. 1c

# Fig. 2a

# Fig. 2b

0 040 394

# Fig. 3 a

# Fig. 3 b

0 040 394

Fig. 4

Fig. 5

0 040 394